# EUROPÄISCHE PATENTSCHRIFT

(11) **EP 0 286 013 B1**
(45) Veröffentlichungstag und Bekanntmachung des Hinweises auf die Patenterteilung: **15.09.1993**
(21) Anmeldenummer: 88105234.4
(22) Anmeldetag: 31.03.1988
(51) Int. Cl.: G02B 6/38

(54) **Vielfach-Steckverbinder für Lichtwellenleiter**
Multiple connector for optical fibres
Connecteur multiple pour fibres optiques

(30) Priorität: 09.04.1987 DE 3711940
(43) Veröffentlichungstag der Anmeldung: 12.10.1988
(73) Patentinhaber: Alcatel SEL Aktiengesellschaft, D-70435 Stuttgart (DE); ALCATEL N.V., NL-1077 XX Amsterdam (NL)
(72) Erfinder: Herse, Klaus, D-7252 Weil der Stadt (SE)
(74) Vertreter: Gähr, Hans-Dieter, Dipl.-Ing. (FH)

(56) Entgegenhaltungen:
- EP-A- 0 109 648
- US-A- 4 142 776

## Beschreibung

Die Erfindung betrifft einen Vielfach-Steckverbinder für Lichtwellenleiter, der folgende Merkmale aufweist:
- ein Führungsteil (8) mit einem durchgehenden Führungskanal (9), der einen prismenartigen Querschnitt aufweist,
- zwei in das Führungsteil einschiebbare und miteinander verbindbare Trägerteile (6, 7), die jeweils zwei Auflageflächen (50, 51) aufweisen, mit denen sie an zwei Seitenwänden des Führungskanals (9) geführt werden, und von denen jedes zur Aufnahme mehrerer Lichtwellenleiter (3, 4) mit mehreren parallelen Nuten versehen ist, die derart bezüglich des jeweiligen Trägerteils angeordnet sind, daß jeweils jede Nut des einen Trägerteils mit einer Nut des anderen Trägerteils fluchtet, wenn die Trägerteile in den Führungskanal eingeschoben und dabei miteinander verbunden werden, wobei die Enden von in die Nuten eingelegten Lichtwellenleitern stirnseitig miteinander gekoppelt werden.

Bei einem bekannten derartigen Steckverbinder weisen die beiden Trägerteile für die Lichtwellenleiter oder Glasfasern und das sie aufnehmende Führungsteil einen in etwa prismatischen Querschnitt auf, wobei zwei miteinander einen Winkel α bildende Grundflächen des Führungsteils und zwei entsprechende Flächen der beiden Trägerteile die erforderliche genaue axiale Ausrichtung der einzelnen Glasfasern ergeben sollen (DE-OS 27 42 084). Zwischen der Abdeckung der beiden Trägerteile und der oberen Oberfläche des Führungsteils ist entweder kein Spielraum vorhanden, oder es ist ein gewisser Spielraum vorhanden, wobei mit Schrauben dafür gesorgt wird, daß die genannten Bezugsflächen der Trägerteile und des Führungsteils zueinander ausgerichtet sind. Es ist aber sehr schwierig, die jeweils zwei Paare von Bezugsflächen so genau zu bearbeiten, daß die erforderliche exakte axiale Ausrichtung sämtlicher zu verbindender Glasfasern erreicht wird. Ergeben die Messungen an dem montierten Vielfachstecker, daß die Einfügungsdämpfung zu groß ist, so ist ein Nacharbeiten der ganzen Bezugsflächen schwierig, zumal dabei auch die angestrebte enge Passung der Trägerteile in dem Führungsteil verschlechtert wird.

Die Kraft, mit der die beiden Trägerteile mit ihren Stirnseiten gegeneinander gedrückt werden, hängt bei dem bekannten Steckverbinder von Unwägbarkeiten bei der Montage und von der Reibkraft zwischen den Trägerteilen und dem Führungsteil ab. Es ist kein genau definierter Anpressdruck gesichert, der gewährleisten könnte, daß die Glasfaserenden ohne einen Luftspalt aufeinanderstossen.

Der Erfindung liegt die Aufgabe zugrunde, einen Vielfach-Steckverbinder für Lichtwellenleiter zu schaffen, der eine einfach lösbare und wiederherstellbare Verbindung zwischen zwei Lichtwellenleiter-Bündeln ergibt und eine möglichst geringe Einfügungsdämpfung aufweist.

Diese Aufgabe wird erfindungsgemäß durch einen Steckverbinder der eingangs genannten Art gelöst, bei dem
- daß das Trägerteil eine separate Halterung (42, 43) aufweist, in der die parallelen Nuten vorgesehen sind und die jeweils in einer Ausnehmung (48) des jeweiligen Trägerteils (6, 7) montiert ist und
- daß jede Ausnehmung (48) eine in Richtung des Führungskanals verlaufende Anlagekante (49) aufweist, an die die Halterung (42, 43) angelegt wird, so daß durch die vorbestimmten Abstände (X, Y) zwischen der Anlagekante (49) einerseits und den zwei Auflageflächen (50, 51) des Trägerteils andererseits eine genaue Lage der Lichtwellenleiter (3, 4) im Trägerteil festgelegt ist.

Ein Vorteil des erfindungsgemäßen Steckverbinders ist, daß die genaue axiale Ausrichtung der Lichtwellenleiter in den beiden Steckverbinderhälften durch genaues Einhalten von nur zwei Abständen gewährleistet wird. Das genaue Einhalten dieser beiden Abstände wird durch genaues Bearbeiten einer Anlagekante im Führungsteil, die sich exakt schleifen läßt, und einer seitlichen Flanke der Faserhalterung, die sich sehr genau ätzen läßt, erreicht. Sollte sich die Dämpfung eines hergestellten erfindungsgemäßen Steckverbinders doch als zu groß herausstellen, so lassen sich die genannten Abstände durch leichtes Abschleifen der schmalen Führungsflächen, die die Ausnehmung des jeweiligen Trägerteils umfassen, genauer einstellen.

Vorteilhafte Weiterbildungen des erfindungsgemäßen Vielfach-Steckverbinders weisen die Merkmale der Unteransprüche auf. Insbesondere gewährleistet eine seitlich auf die Trägerteile drückende Feder, daß diese einwandfrei und in reproduzierbarer Lage an den beiden inneren Seitenwänden des Führungsteils anliegen. Eine axial gegen eines der Trägerteile drückende Feder gewährleistet einen genau definierten Anpressdruck zwischen den beiden Trägerteilen bei zusammengesteckten Steckverbinder-Hälften.

Ausführungsbeispiele der Erfindung werden im folgenden anhand von Zeichnungen erläutert.

Es zeigen:
- Fig. 1: einen erfindungsgemäßen Vielfach-Steckverbinder für Lichtwellenleiter, in einem axialen längsschnitt,
- Fig. 2: den Steckverbinder nach Fig. 1 in einer Schnittansicht senkrecht zu der Längsachse,
- Fig. 3: eine in dem Steckverbinder nach Fig. 1 verwendete Halterung für mehrere Lichtwellenleiter in perspektivischer Darstellung,
- Fig. 4: einen vergrößerten Detailausschnitt aus Fig. 2,
- Fig. 5: ein Trägerteil einer anderen Ausführung eines erfindungsgemäßen Vielfach-Steckverbinders in einer Montagevorrichtung, und
- Fig. 6: ein Trägerteile gemäß Fig. 5 enthaltenden Vielfach-Steckverbinder, in einer Schnittansicht senkrecht zur Längsachse.

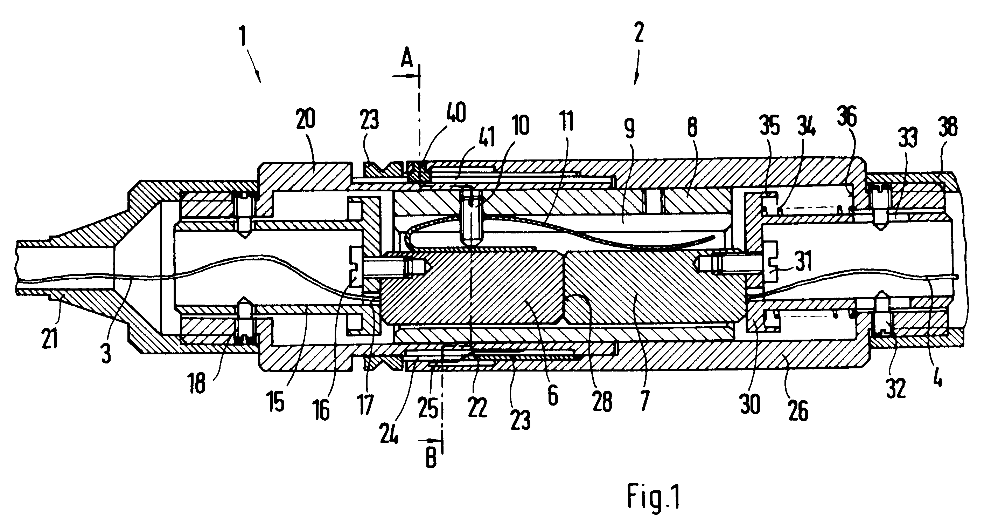

Ein erfindungsgemäßer Vielfach-Steckverbinder (Figuren 1 bis 4) besteht aus zwei zusammensteckbaren Hälften, einer ersten oder - in der Zeichnung - linken Verbinderhälfte 1 und einer zweiten oder "rechten" Verbinderhälfte 2, die in zusammengestecktem Zustand dargestellt sind (Fig. 1). Mit dem Steckverbinder werden zwei Bündel von als Lichtwellenleiter dienenden Glasfasern optisch miteinander gekoppelt. Jedes Bündel besteht z.B. aus 10 einzelnen Glasfasern, von denen in der Zeichnung nur je eine linke Glasfaser 3 und eine rechte Glasfaser 4 dargestellt sind.

Die beiden Verbinderhälften 1 und 2 sind ungleich, sie enthalten aber zwei untereinander gleiche Trägerteile 6 und 7. Diese Trägerteile dienen der Aufnahme und Führung von die Glasfasern aufnehmenden Halterungen, wie anhand der folgenden Figuren noch zu erläutern sein wird.

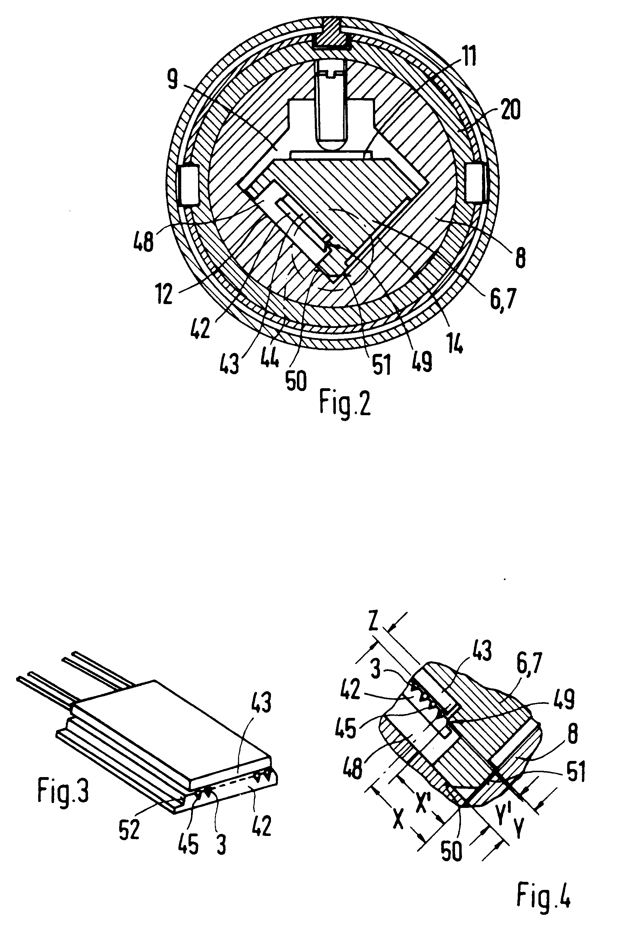

Die Trägerteile 6, 7 sind als Prismen mit etwa dreieckförmigen Querschnitt (vergleiche Fig. 2) ausgebildet. Sie sind von einem zylinderförmigen Führungsteil 8 umschlossen, das einen der Form der Trägerteile 6, 7 entsprechenden prismenartigen Innenraum 9 aufweist. Mit dem linken Trägerteil 6 ist das Führungsteil 8 durch eine Stiftschraube 10 fest verbunden. Mit der Stiftschraube 10 ist auch eine Flachfeder 11 befestigt, die mit ihrem linken, umgebogenen Ende zwischen dem Trägerteil 6 und dem Führungsteil 8 eingeklemmt ist. In ihrem oberen Schenkel weist sie eine Bohrung auf, durch die die Stiftschraube 10 hindurchgesteckt ist. Das rechte Ende der Flachfeder 11 ist so umgebogen, daß beim Zusammenstecken des Steckverbinders das rechte Trägerteil 7 eingeführt werden kann, wobei sie aber das Trägerteil 7 nach unten drückt. Durch die Flachfeder 11 werden bei zusammengestecktem Steckverbinder die beiden Trägerteile 6, 7 nach unten und damit gegen zwei innere Seitenwände 12, 14 des Führungsteils 8 gedrückt, die die Bezugsflächen für die genaue Lage der Trägerteile 6, 7 und damit der zu verbindenden Glasfasern bilden.

Ein konzentrisch zu der Achse des Steckverbinders angeordnetes Rundteil 15 aus Kunststoff ist mit einer Schraube 16 an dem Trägerteil 6 befestigt. Dieses Rundteil 15 dient als Stauraum für die durch einen ringsektorförmigen Durchbruch 17 hindurchtretenden Glasfasern 3. Das Rundteil 15 ist durch zwei Gewindestifte 18 mit einer linken Außenhülse 20 so verbunden, daß es weder axial verschoben noch verdreht werden kann - abgesehen von einem kleinen Toleranzspiel -. Auf die Außenhülse 20 ist noch eine Kunststoff-Kappe 21 aufgeschraubt, die die zwei Gewindestifte 18 abdeckt und als Knickschutz für die Glasfasern dient. Da das Trägerteil 6 durch die Schraube 16 mit dem Rundteil 15 und dieses durch die Gewindestifte 18 mit der Außenhülse 20 und andererseits das Trägerteil 6 über die Stiftschraube 10 mit dem Führungsteil 8 verbunden ist, bilden all die genannten Teile die linke Verbinderhälfte 1 des Steckverbinders. An der Außenhülse 20 sind außen zwei streifenförmige Rastfedern 22 befestigt, die zweimal umgeknickt sind und die beiden Verbinderhälften 1 und 2 in zusammengestecktem Zustand miteinander verriegeln. Eine Entriegelungshülse 23 weist achsparallel verlaufende Aussparungen 24 auf, durch die die Rastfedern 22 - bei zusammengesteckten Verbinderhälften 1, 2 - hindurchgreifen und in einer Hinterdrehung 25 einer zweiten oder rechten Außenhülse 26 einrasten. Sie verhindern dabei ein Abziehen der linken Außenhülse 20 von der sie in einem Teil ihrer Länge umschließenden Außenhülse 26.

Da das Führungsteil 8 mit etwa der Hälfte seiner Länge über das linke Trägerteil 6 hinausragt, ist dessen - wie erwähnt - polierte und damit sehr empfindliche Stirnfläche 28 gegen Berührung und damit gegen Verschmutzung und Beschädigung wirkungsvoll geschützt.

Die rechte Verbinderhälfte 2 weist ebenfalls ein Rundteil 30 auf, das durch eine Schraube 31 mit dem rechten Trägerteil 7 verbunden ist. Gegenüber der Außenhülse 26 ist das Rundteil 30 axial verschiebbar, da zwei in die Außenhülse eingeschraubte Gewindestifte 32 in in dem Rundteil 30 vorgesehene Langlöcher 33 hineinragen. Außen auf dem Rundteil 30 sitzt eine Druckfeder 34, die als Anlageflächen einerseits einen Kragen 35 des Rundteils 30 und andererseits die ringförmige Innenfläche (36) einer Stufe der Außenhülse 26 hat. Durch die Druckfeder 34 wird die linke Stirnfläche des Trägerteils 7 immer mit genau definiertem Anpressdruck gegen die Stirnfläche 28 des Trägerteils 6 gedrückt. Die Langlöcher 33 sind so dimensioniert, daß sämtliche Fertigungstoleranzen der Einzelteile des Steckverbinders in Axialrichtung das federnde Aufeinanderdrücken der Trägerteile 6 und 7 nicht beeinträchtigen.

Eine Kunststoff-Kappe 38, die auch als Zugentlastung und Knickschutz für die Glasfasern 4 dient, ist auf das rechte Endstück der Außenhülse 26 aufgeschraubt und deckt dabei die Gewindestifte 32 ab.

In dem Bereich der linksseitigen Öffnung der Außenhülse 26 ist in diese von innen eine Niete 40 eingepresst, die in Verbindung mit einer Axialnut 41 am Außenumfang der Außenhülse 20 als Führung beim Zusammenstecken dient. Beide Verbinderhälften 1, 2 können nur in einer Stellung zueinander zusammengesteckt werden.

Da die beiden Außenhülsen 20 und 26 beim Zusammenstecken aufeinander geschoben werden, reicht die rechte Außenhülse 26 weit über die polierte Stirnfläche des Trägerteils 7 hinaus. Diese Stirnfläche wird somit ebenfalls - auch bei auseinander gezogenen Verbinderhälften - wirksam gegen Berührung und damit gegen Beschädigungen und Verschmutzungen geschützt.

In jeder der beiden Verbinderhälften sind mehrere - z.B. zehn - Glasfasern 3 oder 4 eines Lichtwellenleiterbündels in einer Halterung befestigt, die aus einem Grundplättchen 42 und aus einem Abdeckplättchen 43 (Figuren 2, 3 und 4) besteht. Diese Halterung 42, 43 ist in Figur 3 perspektivisch dargestellt, während der durch einen Kreis 44 in Figur 2 angedeutete Bereich in Figur 4 in größerem Maßstab dargestellt ist.

Das Grundplättchen 42 besteht aus einem einkristallinem Siliziumplättchen, in das im genauen Rasterabstand - im Ausführungsbeispiel 280 um - V-förmige, genau parallel zueinanderverlaufende und gleichtiefe Nuten 45 eingeätzt sind. In diese Nuten 45 werden die entsprechend sortierten Glasfasern 3, nachdem von ihnen die Primärbeschichtung entfernt worden ist, eingelegt. Durch eine nicht dargestellte Vorrichtung werden die Fasern 3 in den Nuten 45 niedergehalten während das Abdeckplättchen 43, das ebenfalls aus einem beidseitig glatten einkristallinem Siliziumplättchen besteht, auf die Faser 3 aufgelegt und festgedrück wird. Damit wird jede der zehn Fasern 3 jeweils durch drei ringsum verlaufende Flächen in eine genau definierte Position gebracht, die den gegenseitigen Abstand festlegt. Eine Abweichung vom exakten Rastermaß der Kernmitten der Fasern 3 zueinander ergibt sich hier im wesentlichen nur durch die Durchmessertoleranz der Glasfasern 3, die bei einem Außendurchmesser von 125 µm ± 3 µm beträgt. In die Zwischenräume zwischen den Glasfasern 3, dem genuteten Grundplättchen 42 und dem glatten Abdeckplättchen 43 wird eine genau portionierte Menge eines Zwei-Komponenten-Epoxydharzklebers eingefüllt, mit Hilfe der Kapillarwirkung eingezogen und danach ausgehärtet.

Die so hergestellte Halterung 42, 43 wird anschließend in das Trägerteil 6 oder 7 eingeklebt. Die Trägerteile 6, 7 haben dazu eine Längsausnehmung 48, in der die Halterung 42, 43 aufgenommen wird und die mit einer exakt in Längsrichtung geschliffenen Kante 49 versehen ist. Die Abstände dieser Kante 49 von zwei in Längsrichtung verlaufenden Auflageflächen 50 und 51 der Trägerteile 6 oder 7 sind in Figur 4 mit X' und Y' bezeichnet. Die Kante 49 dient als Anlage für eine seitliche Flanke 52 des Grundplättchen 42 (vgl. Fig. 3), die sehr genau geätzt ist. Diese Flanke wird zusammen mit den Nuten 45 aus dem Siliziumkristall, und zwar mit Hilfe einer sehr genau hergestellten Ätzmaske, herausgeätzt. Der Neigungswinkel der Flanke 52 und der V-Nuten 45 ergibt sich aus der Vorzugsrichtung des Siliziumkristalls.

Zum Befestigen der Halterung in dem Trägerteil wird die glatte Oberfläche des Abdeckplättchens 43 mit Klebstoff benetzt und die ganze Halterung 42, 43 auf dem Trägerteil 6 oder 7 bis an die Anlage-Kante 49 herangeschoben. Die Halterung wird dann fixiert und der Klebstoff ausgehärtet.

Sind die V-Nuten 45 in den Grundplättchen 42 der beiden Steckerhälften genau gleich geätzt und weisen die beiden Abdeckplättchen 43 die gleiche Dicke Z (vgl. Fig. 4) auf, so addiert sich zu der Toleranz der Abstände X' und Y' nur noch eine geringfügige Abweichung, die vom Durchmesser der Glasfasern abhängt. Die senkrechten Abstände des Faserkerns der ersten Glasfaser 3 in der Halterung 42, 43 zu den Auflageflächen 50 und 51 des Trägerteils 6 oder 7 sind in Figur 4 mit X und Y bezeichnet. Die Gesamttoleranz dieser Abstände X und Y ist bei Verwendung gleicher Teile zum Herstellen der beiden Halterungen 42, 43 praktisch nicht größer als die Toleranz der Abstände X' und Y'.

Daraus folgt, daß je genauer die Anlage-Kante 49 aus dem Trägerteil 6, 7 herausgeschliffen wird, desto weniger nach erfolgter Verklebung der Halterung 42, 43 mit dem Trägerteil 6, 7 die vorgegebenen Abstände X und Y nachgearbeitet werden müssen. Beträgt die Toleranz der Abstände X und Y z.B. ± 2,5 µm, so entsteht durch den seitlichen Versatz der Glasfasern eine zusätzlich Dämpfung von etwa 0,7 dB. Ist nun dieser Dämpfungsanteil zu groß, so ist es leicht möglich, durch flächiges Abschleifen der Auflageflächen 50, 51 des Trägerteils 6 oder 7 von Hand die Abstände X und/oder Y genauer einzustellen. Die Kante 49 sorgt auch dafür, daß die Achsen der Glasfasern zu der Steckrichtung der Trägerteile 6, 7 fluchten.

Nachdem die Halterung 42, 43 und das jeweilige Trägerteil 6 oder 7 miteinander verklebt sind, werden beide stirnseitig geschliffen, geläppt und poliert. Erst danach werden, falls erforderlich, die Abstände X und Y durch flächiges Abschleifen genau eingestellt, da nur bei polierter Stirnfläche der Halterung und der, Glasfasern eine genaue Vermessung des Abstandes der optischen Fasermitte zu den beiden Führungsflächen 50, 51 der Trägerteile 6 und 7 möglich ist. Die optische Fasermitte läßt sich unter dem Mikroskop genau anhand des sogenannten Dip, einer sehr schmalen Absenkung des Brechungsindexes in der Fasermitte, feststellen.

Um die beiderseitigen Lichtwellenleiter-Enden miteinander zu verbinden, wird wie folgt vorgegangen. Die beiden Verbinderhälften 1 und 2 werden so übereinander geschoben, daß die Niete 40 der rechten Außenhülse 26 in die Axialnut 41 der linken Außenhülse 20 eingreift und dadurch die Glasfasern 3 und 4 eindeutig zueinander vorzentriert werden. Beim weiteren Zusammenführen der beiden Steckerhälften 1, 2 wird das Trägerteil 7 der rechten Verbinderhälfte 2 von der Flachfeder 11 erfaßt und von dieser in den Nutgrund des Führungsteils 8 gedrückt. Die beiden unteren Seitenwände 12, 14 des Führungsteils 8 bilden miteinander einen Winkel von 90°. Die optischen Achsen der in den Trägerteilen 6 und 7 befindlichen Glasfasern 3 bzw. 4 liegen nun jeweils fluchtend auf einer Linie. Das Trägerteil 7 wird dann solange in das Führungsteil 8 eingeführt, bis die gegenüberliegenden zwei Rastfedern 22, die mit der Außenhülse 20 fest verbunden sind, in die Hinterdrehung 25 der Außenhülse 26 einrasten.

Die Einzelteile des Vielfach-Steckverbinders sind so dimensioniert, daß nun die Druckfeder 34, etwas zusammengedrückt, die Stirnflächen 28 mit den polierten Glasfaserenden beider Trägerteile 6, 7 leicht federnd aneinanderpresst. Gleichzeitig drückt die Flachfeder 11 die Trägerteile 6, 7 in das Führungsteil 8. Die Flachfeder 11 und die Druckfeder 34 sind in ihrer Federkraft aufeinander abgestimmt. Die optische und mechanische Kopplung der Glasfaserbündel und der Verbinderhälften ist damit erreicht.

Zum Entkoppeln der beiden Verbinderhälften wird mit dem Daumennagel in die ringförmig verlaufende Kerbe der Entriegelungshülse 23 gegriffen und diese mit leichtem Druck zur Außenhülse 20 hin verschoben. Die Ränder beider Aussparungen 24 der Entriegelungshülse 23, durch die die Rastfedern 22 hindurchgreifen, drücken nun auf die schrägen Flächen der Rastfedern 22 und drücken diese somit aus der Hinterdrehung 25 der Außenhülse 26 heraus. Die Druckfeder 34 kann sich nun soweit entspannen, bis die in die Außenhülse 26 eingeschraubten Gewindestifte 32 an der rechten Begrenzung der Langlöcher 33 im Rundteil 30 auflaufen. Beide Verbinderhälften sind nun mechanisch entriegelt. Die optische Entkopplung erfolgt erst dann, wenn beide Verbinderhälften 1, 2 voneinander abgezogen werden.

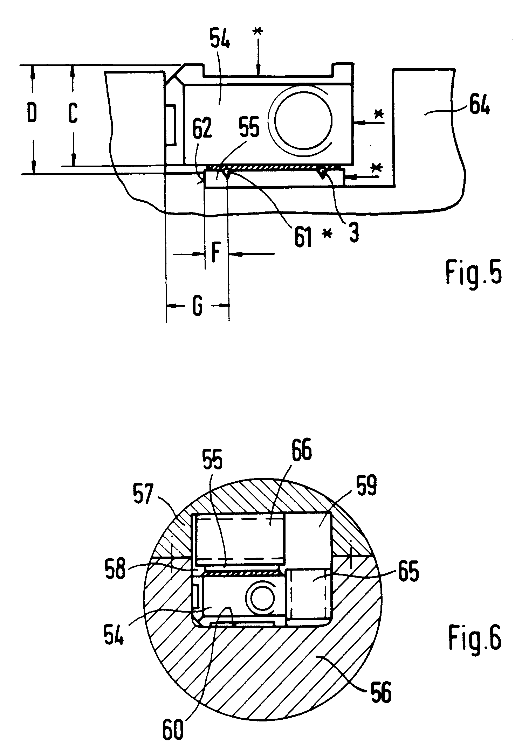

Der nun anhand der Figuren 5 und 6 zu erläuternde Vielfach-Steckverbinder ist einfacher herzustellen als der vorstehend beschriebene Steckverbinder. Er enthält zwei Trägerteile 54 - in der Zeichnung ist nur eines dargestellt - , die einen im wesentlichen rechteckförmigen Querschnitt aufweisen. Die Halterung für die Glasfasern besteht hier nur aus einem die Glasfasern aufnehmenden Grundplättchen 55, das direkt an das Trägerteil 54 festgeklebt ist. Das Führungsteil für die Trägerteile 54 besteht hier jeweils aus einem Unterteil 56 und einem Oberteil 57. Das Führungsteil-Unterteil 56 weist einen Innenraum 58 auf, der die Gestalt eines Rechteckprismas hat. Das Oberteil 57 hat einen entsprechend gestalteten Innenraum 59.

Da ein Abdeckplättchen entfällt, muß bei dem Trägerteil 54 nur ein Abstand C (Fig. 5) vorgefertigt werden. Ein Abstand D setzt sich zusammen aus dem Abstand C plus dem halben Faserdurchmesser und stellt somit den senkrechten Abstand der Fasermitte zu einer Führungsfläche 60 des Führungsteil-Unterteils 56 dar. Ein Abstand F von der Spitze der ersten V-Nute 61 in dem Grundplättchen 55 zu dessen geätzter seitlicher Anlagefläche 62 ist ebenfalls genau vorzufertigen. Um mehrere Trägerteile 54 mit Glasfasern aufnehmenden Grundplättchen 55 zu versehen, legt man untereinander identisch vorgefertigte genutete Grundplättchen 55 aus Silizium, Glasfasern 3 und Trägerteile 54 in ein geeignet ausgestaltetes Hilfswerkzeug 64 ein. Seitlich und von oben drückende Kräfte, die in der Zeichnung mit einem * angedeutet sind, bewirken, daß die eingelegten Teile, d.h. das Trägerteil 54 und das Grundplättchen 55 immer genau in die Ecke zu liegen kommen. In dem Hilfswerkzeug 64 werden die Teile auch miteinander verklebt. Der Abstand G zwischen der ersten V-Nute 60 und der linken Auflagefläche des Trägerteils 54 und der Abstand D zwischen der Fasermitte und der oberen Auflagefläche des Trägerteils 54 unterscheiden sich bei den auf diese Weise nacheinander hergestellten Trägerteilen praktisch nicht voneinander. Falls notwendig können sie leicht durch nachträgliches flächiges Abziehen auf einer ebenen, spanabhebenden Fläche korrigiert werden.

Das mit den Glasfasern und dem Grundplättchen 55 verklebte Trägerteil 54 wird dann in den durchgeschliffenen, rechteckigen Innenraum 58 des Führungsteil-Unterteils 56 eingelegt. Nach Einsetzen von Flachfedern 65 und 66 wird das Oberteil 57 aufgesetzt und mit dem Unterteil 56 fest verbunden. Die Flachfedern 65 und 66 bewirken einen genauen Sitz des Trägerteils 54 in dem Innenraum des Führungsteils 56.

Bei dem Steckverbinder nach den Figuren 1 bis 4 werden die Verbinderhälften bevorzugt paarweise genau aufeinander ausgerichtet hergestellt, während bei dem Steckverbindern nach den Figuren 5 und 6 bevorzugt mehrere beliebig untereinander austauschbare Verbinderhälften hergestellt werden.

## Patentansprüche

1. Vielfach-Steckverbinder für Lichtwellenleiter, der folgende Merkmale aufweist:
- ein Führungsteil (8) mit einem durchgehenden Führungskanal (9), der einen prismenartigen Querschnitt aufweist,
- zwei in das Führungsteil einschiebbare und miteinander verbindbare Trägerteile (6, 7), die jeweils zwei Auflageflächen (50, 51) aufweisen, mit denen sie an zwei Seitenwänden des Führungskanals (9) geführt werden, und von denen jedes zur Aufnahme mehrerer Lichtwellenleiter (3, 4) mit mehreren parallelen Nuten versehen ist, die derart bezüglich des jeweiligen Trägerteils angeordnet sind, daß jeweils jede Nut des einen Trägerteils mit einer Nut des anderen Trägerteils fluchtet, wenn die Trägerteile in den Führungskanal eingeschoben und dabei miteinander verbunden werden, wobei die Enden von in die Nuten eingelegten Lichtwellenleitern stirnseitig miteinander gekoppelt werden,
**dadurch gekennzeichnet,**
- daß das Trägerteil eine separate Halterung (42, 43) aufweist, in der die parallelen Nuten vorgesehen sind und die jeweils in einer Ausnehmung (48) des jeweiligen Trägerteils (6, 7) montiert ist und
- daß jede Ausnehmung (48) eine in Richtung des Führungskanals verlaufende Anlagekante (49) aufweist, an die die Halterung (42, 43) angelegt wird, so daß durch die vorbestimmten Abstände (X, Y) zwischen der Anlagekante (49) einerseits und den zwei Auflageflächen (50, 51) des Trägerteils andererseits eine genaue Lage der Lichtwellenleiter (3, 4) im Trägerteil festgelegt ist.

2. Steckverbinder nach Anspruch 1, dadurch gekennzeichnet, daß er mit einer seitlich wirkenden Feder (11) versehen ist, durch die die Trägerteile (6, 7) gegen zwei Seitenwände (12, 14) des prismenartigen Innenraums (9) gedrückt werden.

3. Steckverbinder nach Anspruch 1, dadurch gekennzeichnet, daß er mit einer axial wirkenden Feder (34) versehen ist, durch die die beiden Trägerteile (6, 7) stirnseitig aufeinander gedrückt werden.

4. Steckverbinder nach Anspruch 1, dadurch gekennzeichnet, daß die Halterung aus einem Grundplättchen (42) besteht, in das in einem genauen Rasterabstand V-förmige, genau parallel zueinander verlaufende und gleich tiefe Nuten (45) eingeätzt sind.

5. Steckverbinder nach Anspruch 4, dadurch gekennzeichnet, daß die Halterung ein planparalleles, beidseitig glattes Abdeckplättchen (43) aufweist, das auf die in die V-förmigen Nuten (45) eingelegten Lichtwellenleiter (3) aufgedrückt und mit diesen und mit dem Grundplättchen (42) verklebt ist.

6. Steckverbinder nach Anspruch 1, dadurch gekennzeichnet, daß eines der beiden Trägerteile (6) mit dem Führungsteil (8) fest verbunden ist und daß das Führungsteil (8) über die Stirnfläche (28) des Trägerteils (6) hinausragt.

7. Steckverbinder nach Anspruch 6, dadurch gekennzeichnet, daß das andere Trägerteil (7) mit einer Außenhülse (26) verbunden ist, die über die Stirnfläche dieses Trägerteils (7) hinausragt.

## Claims

1. A multiway connector for optical waveguides which has the following features:
- a guide member (8) with a continuous guide channel (9) which has a prism-like cross section,
- two interconnectable support members (6, 7) which are insertable into the guide member and each have two bearing surfaces (50, 51) whereby they are guided along two sidewalls of the guide channel (9), each of the support members (6, 7) being provided with a plurality of parallel grooves for receiving a corresponding plurality of optical waveguides (3, 4), said grooves being arranged in such a way that each of the grooves of one support member is aligned with one of the grooves of the other support member if the support members are inserted into the guide channel and thus interconnected, with optical waveguides in the grooves being coupled together at the ends,
**characterized in**
- that the support member has a separate holding device (42, 43) in which the parallel grooves are provided and which is mounted in a recess (48) of the respective support member (6, 7), and
- that each recess (48) has a locating edge (49) which extends in the direction of the guide channel and against which the holding device (42, 43) is laid, so that the predetermined distances (X, Y) between the locating edge (49) on the one hand and the two bearing surfaces (50, 51) of the support member on the other hand define precise positions of the optical waveguides (3, 4) in the support member.

2. A connector as claimed in claim 1, characterized in that it is provided with a laterally acting spring (11) which urges the support members (6, 7) against the two sidewalls (12, 14) of the prism-like interior space (9).

3. A connector as claimed in claim 1, characterized in that it is provided with an axially acting spring (34) which presses the two support members (6, 7) against each other at their ends.

4. A connector as claimed in claim 1, characterized in that the holding device comprises a base plate (42) into which V-shaped, parallel grooves (45) of equal depth are etched at exactly equal intervals.

5. A connector as claimed in claim 4, characterized in that the holding device comprises a plane-parallel, bi-laterally flat cover plate (43) which is pressed on the optical waveguides (3) in the V-shaped grooves (45) and is secured to the optical waveguides and to the base plate (42) with adhesive.

6. A connector as claimed in claim 1, characterized in that one of the two support members (6) is permanently connected with the guide member (8), and that the guide member (8) projects beyond the end face (28) of said support member (6).

7. A connector as claimed in claim 6, characterized in that the other support member (7) is connected with an external sleeve (26) which projects beyond the end face of said support member (7).

## Revendications

1. Connecteur multiple pour fibres optiques, présentant les caractéristiques suivantes:
- une pièce de guidage (8) avec un canal de guidage traversant (9) qui présente une section prismatique,
- deux pièces supports (6, 7) qui peuvent s'enfiler dans la pièce de guidage, se relier l'une à l'autre, qui présentent chacune deux surfaces d'appui (50, 51) par lesquelles elles sont guidées contre deux parois latérales du canal de guidage (9), et dont chacune comporte, pour recevoir plusieurs fibres optiques (3, 4), plusieurs rainures parallèles qui, par rapport à la pièce support respective, sont disposées de façon que, chaque fois, chaque rainure de l'une des pièces supports soit alignée avec un rainure de l'autre pièce support, lorsque l'on enfile les pièces supports dans le canal de guidage et qu'on les y relie ensemble, les extrémités des fibres optiques placées dans les rainures étant couplées ensemble par leur face frontale,
connecteur caractérisé par le fait que
- la pièce support présente une monture distincte (42, 43), dans laquelle sont prévues des rainures parallèles et qui est chaque fois montée dans un évidement (48) de la pièce support respective (6, 7) et
- chaque évidement (48) présente une arête de butée (49) qui est orientée selon la direction du canal de guidage et contre laquelle bute la monture (42, 43), de façon que, grâce aux distances (X, Y) prédéterminées entre l'arête de butée (49) d'une part et les deux surfaces d'appui (50, 51) de la pièce support d'autre part, c'est une position précise des fibres optiques (3, 4) qui est déterminée dans la pièce support.

2. Connecteur selon la revendication 1, caractérisé par le fait qu'il comporte un ressort (11) à action latérale, grâce auquel les pièces supports (6, 7) sont poussées contre deux parois latérales (12, 14) de l'espace intérieur prismatique (9).

3. Connecteur selon la revendication 1, caractérisé par le fait qu'il comporte un ressort (34) à action axiale grâce auquel les deux pièces supports (6, 7) sont poussées l'une sur l'autre par leur face frontale.

4. Connecteur selon la revendication 1, caractérisé par le fait que la monture est constituée d'une plaquette de base (42) dans laquelle, à une distance de trame précise, sont usinées, par attaque chimique, des rainures (45) en forme de V, orientées exactement parallèlement l'une à l'autre et de même pronfondeur.

5. Connecteur selon la revendication 4, caractérisé par le fait que la monture présente une plaquette de recouvrement (43) planparallèle lisse des deux côtés, qui est posée sous pression sur les fibres optiques (3) placées dans les rainures en forme de V (45) et collée avec celles-ci et avec la plaquette de base (42).

6. Connecteur selon la revendication 1, caractérisé par le fait que l'une des deux pièces supports (6) est fixement reliée avec la pièce de guidage (8) et que la pièce de guidage (8) dépasse au-delà de la surface frontale (28) de la pièce support (6).

7. Connecteur selon la revendication 6, caractérisé par le fait que l'autre pièce support (7) est reliée à une douille extérieure (26) qui dépasse au-delà de la surface frontale de cette pièce support (7).
